# EUROPÄISCHE PATENTSCHRIFT

(11) **EP 2 619 003 B1**
(45) Veröffentlichungstag und Bekanntmachung des Hinweises auf die Patenterteilung: **24.09.2014**
(21) Anmeldenummer: 11746550.0
(22) Anmeldetag: 22.08.2011
(51) Int. Cl.: B32B 17/10, G02B 27/01, C09K 11/06, C08K 5/00

(54) **GLASSCHEIBE ALS HEAD-UP-DISPLAY**
GLASS PANE USED AS HEAD-UP DISPLAY
FEUILLE EN VERRE UTILISÉE COMME AFFICHAGE TÊTE HAUTE

(30) Priorität: 21.09.2010 EP 10177778
(43) Veröffentlichungstag der Anmeldung: 31.07.2013
(73) Patentinhaber: Saint-Gobain Glass France, 92400 Courbevoie (FR)
(72) Erfinder: LABROT, Michael, 52072 Aachen (DE)
(74) Vertreter: Gebauer, Dieter Edmund
(86) Internationale Anmeldenummer: PCT/EP2011/064354
(87) Internationale Veröffentlichungsnummer: WO 2012/038170

(56) Entgegenhaltungen:
- EP-A1- 0 157 030
- EP-A2- 0 990 941
- FR-A1- 2 929 017
- US-A1- 2002 120 916
- US-A1- 2006 171 007
- US-A1- 2008 318 063

## Beschreibung

Die Erfindung betrifft eine Glasscheibe, ein Verfahren zur Herstellung der Glasscheibe und deren Verwendung als Head-Up-Display.

Head-Up-Displays (HUD) sind in der Luftfahrt weit verbreitet. Die im direkten Sichtfeld der Piloten montierten Systeme zeigen die wichtigsten Informationen des eigenen und der fremden Flugzeuge an. Diese im militärischen Bereich etablierten und vielgenutzten Systeme haben auch im zivilen Bereich, insbesondere im Automobilbereich, viele Anwendungsmöglichkeiten. So können Daten zur Geschwindigkeit, der Abstand zum vorausfahrenden Fahrzeug oder Richtungsangaben des Navigationsgerätes im Gegensatz zu Head-Down-Displays (HDD) direkt auf Augenhöhe des Fahrers angezeigt werden. Diese Möglichkeiten verbessern deutlich die Verkehrssicherheit des Fahrzeuges, da der Fahrer beim Blick auf die Instrumente die Verkehrslage und -situation nicht beobachten kann. Bei erhöhten Geschwindigkeiten des Fahrzeugs, beispielsweise auf der Autobahn, kann der "blind" zurückgelegte Fahrzeugweg beträchtlich sein und eine erhöhte Unfallgefahr bedingen.

Werden Head-Up-Displays (HUD) von einer externen Lichtquelle, wie beispielsweise von einem Laser beleuchtet, so sind die Leuchtfelder in Abhängigkeit von den herrschenden Licht- und Witterungsverhältnissen nur schwer zu erkennen. Starkes Sonnenlicht und Lichtreflexion durch Wassertropfen oder Schmutzteilchen erschweren deutlich das Erkennen der im Head-Up-Display projizierten Informationen. Dies macht sich besonders deutlich bei virtuellen Bildern bemerkbar, welche auf die Bildfläche, beispielsweise die Frontscheibe, projiziert werden. Nachteile dieser klassischen HUDs sind zudem das begrenzte Sichtfeld zum Darstellen der projizierten Informationen. Ein möglicher Lösungsansatz sind reale, auf der Bildfläche über elektromagnetisch angeregte Farbstoffe oder Pigmente erzeugte Bilder. Hierbei kann prinzipiell die gesamte Scheibe als Informationsträger genutzt werden.

Aufgrund der Größe der Scheibe und der Tendenz der Pigmente, sich in der Klebeschicht gleichmäßig zu verteilen, sind relativ hohe Konzentrationen der farbgebenden Pigmente erforderlich. Die Behandlung der Glassscheibe im Autoklaven verstärkt die Lösung der Pigmente in der Klebeschicht. Hohe Pigmentkonzentrationen sind jedoch in vielen Fällen sehr teuer und erfordern unter Umständen besondere Vorsichtsmaßnahmen im Hinblick auf die gefahrstoffrechtliche Einstufung und Behandlung der Pigmente oder Farbstoffe.

DE 603 14 613 T2 offenbart eine photochrome Zusammensetzung und ein Verfahren zu ihrer Herstellung. Die Zusammensetzung enthält ein lineares, vernetzbares Polyurethan oder Polyurethan-Harnstoff Polymer und eine photochrome organische Verbindung.

WO 2004/099172 Al offenbart eine photochrome Zusammensetzung auf benzol-, naphthen- und phenathrochromer Struktur substituiert mit einer Arylamingruppe.

US 7,230,767 B2 offenbart ein Bildschirmsystem in einer Fahrzeugscheibe. Die Anordnung enthält lumineszierende Verbindungen auf der nach außen gerichteten Seite der Innenscheibe. Über eine Leuchtquelle werden die lumineszierenden Verbindungen angeleuchtet und erscheinen im Blickfeld eines Autofahrers.

US 2002/120916 A1 und FR 2929017 A1 offenbaren Windschutzscheiben, bei denen zwei Glasscheiben um eine Zwischenschicht mit lumineszierendem Pigment angeordnet sind.

US 2006/171007 A1 schildert das Zusammenspiel der Komponenten einer derartigen Windschutzscheibe, jedoch ohne Antikratzbeschichtung.

EP 0990941 A2, US 2008/318063 A1 und EP 0157030 A1 zeigen jeweils einen Bilayer mit einer harten Beschichtung.

Die Aufgabe der Erfindung liegt darin, eine Glasscheibe bereitzustellen, die als Head-Up-Display genutzt werden kann und auch bei geringen Pigment- oder Farbstoffkonzentrationen bei allen Lichtverhältnissen eine gute Erkennbarkeit sowie hohe Leuchtkraft in einer oder mehreren Farben ermöglicht.

Die Aufgabe der vorliegenden Erfindung wird erfindungsgemäß durch den unabhängigen Anspruch 1 gelöst. Bevorzugte Ausführungen gehen aus den Unteransprüchen hervor.

Ein erfindungsgemäßes Verfahren zur Herstellung einer Glasscheibe mit Head-Up-Display, eine Vorrichtung und deren Verwendung gehen aus weiteren nebengeordneten Ansprüchen hervor.

Die erfindungsgemäße Glasscheibe umfasst mindestens eine Scheibe und mindestens eine polymere Klebeschicht. Die Scheibe enthält bevorzugt Flachglas (Floatglas), Quarzglas, Borosilikatglas, Kalk-Natron-Glas. Die Scheibe weist bevorzugt eine mittlere Lichttransmission (wenn nicht anders spezifiziert als Lichttransmission für die Lichtart A und einem 2° - Normalbeobachter nach DIN 5033 für Licht der Wellenlängen von 380 nm bis 780 nm) von mehr als 80 %, bevorzugt mehr als 90 % auf. Die Scheibe weist bevorzugt eine Lichttransmission von > 70 %, besonders bevorzugt > 75 % im Wellenlängenbereich von 360 nm bis 420 nm auf.

Die Klebeschicht enthält mindestens ein erstes lumineszierendes Pigment, eine Thermoplast-Folie und eine Sperr-Folie. Die Klebeschicht ist mit der ThermoplastFolienseite an der Scheibe angeordnet und mit der Scheibe fest verbunden. Die Sperrfolie ist auf der der Scheibe abgewandten Seite der Klebeschicht angeordnet. Die Thermoplast-Folie enthält bevorzugt PVB (Polyvinylbutyral) oder EVA (Poly-Ethylvinylacetat). Die lumineszierenden ersten Pigmente sind bevorzugt im gesamten ersten Thermoplast-Folienvolumen enthalten. Die Sperr-Folie wirkt als Diffusionssperre für die lumineszierenden Pigmente. Die Antikratzbeschichtung auf der der Scheibe abgewandten Seite der Sperr-Folie wirkt als harte, kratzfeste Oberfläche. Die Sperr-Folie enthält bevorzugt weniger als 20 %, besonders bevorzugt weniger als 10 % und insbesondere bevorzugt weniger als 1 % der Konzentration an lumineszierendem Pigment wie in der Thermoplast-Folie. Die lumineszierenden Pigmente enthalten im Sinne der Erfindung organische und/oder anorganische lumineszierende Verbindungen, Ionen, Aggregate und/oder Moleküle. Lumineszenz beinhaltet Fluoreszenz und/oder Phosphoreszenzprozesse, die Anregung mit elektromagnetischer Strahlung und die Emission elektromagnetischer Strahlung. Die emittierte Strahlung weist bevorzugt eine andere Wellenlänge als die anregende Strahlung auf. Die emittierte Strahlung weist bevorzugt eine höhere Wellenlänge auf. Die Thermoplast-Folie und gegebenenfalls weitere Thermoplast-Folien weisen bevorzugt eine Lichttransmission von > 70 %, besonders bevorzugt > 82 % gemessen bei einer Wellenlänge von 405 nm auf. Die Lichttransmission der Thermoplast-Folien kann über Foliendicke, Polymerzusammensetzung, Polymerisierungsgrad, Polymerisierungsverteilung, UV-Blocker oder Weichmacher eingestellt werden.

Die Sperr-Folie enthält bevorzugt Polybutylenterephthalat (PBT), Polycarbonat (PC), Polyethylenterephthalat (PET) und Polyethylennaphthalat (PEN), Polyvinylchlorid (PVC), Polyvinylfluorid (PVF), Polyvinylbutyral (PVB) ohne Weichmacher und/oder Copolymere davon, besonders bevorzugt Polyethylenterephthalat (PET).

Die Sperr-Folie weist bevorzugt eine Lichttransmission von > 70 %, besonders bevorzugt > 80 % gemessen bei einer Wellenlänge von 405 nm auf.

Die Thermoplast-Folie weist bevorzugt eine Lichttransmission von > 75 %, bevorzugt > 82 % im Wellenlängenbereich von 390 nm bis 410 nm auf.

Die Klebeschicht enthält bevorzugt PVC (Polyvinylchlorid), PU (Polyurethan), EVA (Poly-Ethylvinylacetat) und Mischungen sowie Copolymere davon.

Die Sperr-Folie enthält bevorzugt ein zweites lumineszierendes Pigment oder Farbstoff. Das zweite lumineszierende Pigment weist bevorzugt eine unterschiedliche Anregungswellenlänge sowie Emissionswellenlänge als das erste lumineszierende Pigment auf. Alternativ können weitere Thermoplast-Folien mit lumineszierenden Pigmenten und dazwischen liegenden Sperr-Folien angeordnet sein.

Die Klebeschicht enthält bevorzugt keine im Bereich des Anregungsspektrums der fluoreszierenden Partikel zwischen 360 nm und 400 nm wirksamen weiteren UV-Blocker. Die erfindungsgemäßen lumineszierenden Pigmente wirken bevorzugt als UV-Blocker.

Das lumineszierende Pigment weist bevorzugt ein lokales Anregungsmaximum im Bereich von 350 nm bis 450 nm, besonders bevorzugt 390 nm bis 420 nm auf.

Das lumineszierende Pigment weist bevorzugt ein lokales Emissionsmaximum im Bereich von 400 nm bis 800 nm auf.

Die Antikratzbeschichtung enthält bevorzugt organisch und/oder anorganisch gebundenes SiO₂, TiO₂, Al₂O₃, Si₃N₄, bevorzugt Polysiloxane. Die Antikratzbeschichtung ist auf der Sperr-Folie auf der der Scheibe abgewandten Seite der Klebeschicht angeordnet.

Die Klebeschicht weist bevorzugt eine Dicke von 0,30 mm bis 1,2 mm, bevorzugt 0,70 mm bis 0,90 mm auf. Die Sperrfolie weist bevorzugt eine Dicke von 0,10 mm bis 0,30 mm auf. Die Thermoplastfolie weist bevorzugt eine Dicke von 0,3 mm bis 0,9 mm auf.

Das lumineszierende Pigment enthält erfindungsgemäß ein Hydroxyalkylterephthalat mit der Formel: R₁-COO-P(OH)x(0-4)-COO-R₂, wobei R₁, R₂ ein Alkyl- oder Allylrest mit 1 bis 10 C Atomen ist, P ein Phenylring, OH am Phenylring gebundene Hydroxylgruppen und x die Anzahl der am Phenylring gebundenen Hydroxylgruppen. Die allgemeine Strukturformel ist:

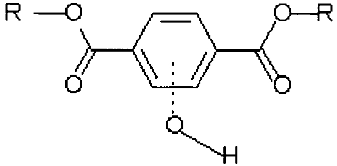

Das lumineszierende Pigment enthält bevorzugt Diethyl-2,5-dihydroxyterephtalat. Die Strukturformel ist:

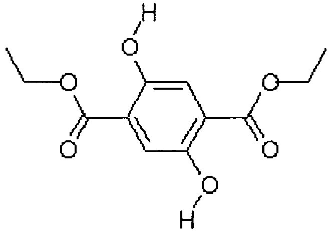

Das lumineszierende Pigment enthält bevorzugt Benzopyrane, Naphthopyrane, 2H-Naphthopyrane, 3H-Naphthopyrane, 2H-Phenanthropyrane, 3H-Phenanthropyrane, Photochrome Harze, Cumarine, Xanthine, Naphthalinsäurederivate, Oxazole, Stilbene, Styryle, Perylene, Naphthalimide, Naphthale, Phenyle, Xanthene, Lanthanoide, bevorzugt Y₂O₃:Eu, YVO₄:Tm, Y₂O₂S:Pr, Gd₂O₂S:Tb und/oder Gemische davon.

Die Thermoplast-Folie enthält bevorzugt 0,1 g/m² bis 15g/m² lumineszierendes Pigment. Die Mengenangaben beziehen sich auf eine Dicke der Thermoplast-Folie von etwa 0,76 mm.

Die Scheibe weist bevorzugt eine Dicke von 1 mm bis 8 mm, besonders bevorzugt 1,4 mm bis 2,5 mm auf.

Die Sperr-Folie weist bevorzugt eine Beschichtung, bevorzugt eine metallische Beschichtung, besonders bevorzugt ZnO, Ag, In₂O₃, TiO₂, AlN auf. Die Beschichtung verstärkt die Wirkung der Sperr-Folie als Diffusionssperre für die lumineszierenden Pigmente oder Farbstoffe. Die Beschichtung ist bevorzugt benachbart zur Thermoplast-Folie auf der Sperr-Folie angeordnet.

Die Erfindung umfasst des Weiteren eine Vorrichtung zum Anzeigen eines Piktogramms, von Zahlen und Schriftzeichen. Die Vorrichtung umfasst eine wie oben beschriebene Glasscheibe und eine auf die Glasscheibe gerichtete Leuchtquelle. Die Leuchtquelle emittiert elektromagnetische Strahlung, bevorzugt elektromagnetische Strahlung der Wellenlänge von 360 nm bis 420 nm. Die von der Leuchtquelle emittierte Strahlung wird von den lumineszierenden Pigmenten in der Klebeschicht absorbiert und mit veränderter Wellenlänge wieder emittiert. Diese emittierte Strahlung wird vom Betrachter als Bildpunkt auf der Scheibe wahrgenommen. Die Leuchtquelle umfasst bevorzugt einen Diodenlaser oder Laserscanner.

Die Erfindung umfasst des Weiteren ein Verfahren zur Herstellung einer Glasscheibe. In einem ersten Schritt wird eine Thermoplastfolie (bevorzugt PVB oder EVA) und eine Sperrfolie (bevorzugt PET) mit einer Antikratzbeschichtung (bevorzugt Polysiloxane) auf der Außenseite der Sperr-Folie zu einer Klebeschicht (Laminierfolie) verbunden. Anschließend wird ein lumineszierendes Pigment auf der Thermoplastfolienseite der Klebeschicht aufgetragen. Die Klebeschicht wird im folgenden Schritt zwischen einer Scheibe (auf der Thermoplastfolienseite) und einer Laminierscheibe (auf der Sperr-Folienseite mit Antikratzbeschichtung) laminiert. Das Laminieren erfolgt bevorzugt bei Temperaturen von 120 °C bis 170 °C, einem Druck von 10 bar bis 15 bar und für einen Zeitraum von 30 min bis 240 min. Beim Laminieren verteilen sich die lumineszierenden Pigmente bevorzugt gleichmäßig in der gesamten Thermoplast-Folie und nur geringfügig in der Sperr-Folie. Die Sperr-Folie enthält nach dem Laminieren bevorzugt weniger als 1 Gew. % an erstem luminseszierendem Pigment in der Thermoplast-Folie. Anschließend wird die Laminierscheibe vorsichtig entfernt und ein Verbund aus Scheibe und Klebeschicht erhalten.

Das lumineszierende Pigment wird bevorzugt über Aufsprühen, Siebdruck, Offsetdruck, Tintenstrahldruck und/oder Flexodruck aufgetragen.

Die Erfindung umfasst des Weiteren die Verwendung der Glasscheibe als transparente oder (teil)getönte Anzeigesysteme, Head-Up-Display in Gebäuden, Fahrzeugen, Flugzeugen und/oder Hubschraubern, besonders bevorzugt als Windschutzscheibe in Fahrzeugen.

Im Folgenden wird die Erfindung anhand von Zeichnungen und eines Ausführungs- sowie Vergleichsbeispiels näher erläutert. Die Zeichnungen sind rein schematische Darstellungen und nicht maßstabsgetreu. Sie schränken die Erfindung in keiner Weise ein.

Es zeigen:
Figur 1 einen Querschnitt einer laminierten Glasscheibe mit lumineszierenden Partikeln nach dem Stand der Technik,
Figur 2 einen Querschnitt einer erfindungsgemäßen Glasscheibe,
Figur 3 einen Querschnitt der erfindungsgemäßen Klebeschicht,
Figur 4 einen Querschnitt einer bevorzugten Ausführungsform der erfindungsgemäßen Klebeschicht,
Figur 5 eine schematische Ansicht der erfindungsgemäßen Vorrichtung.

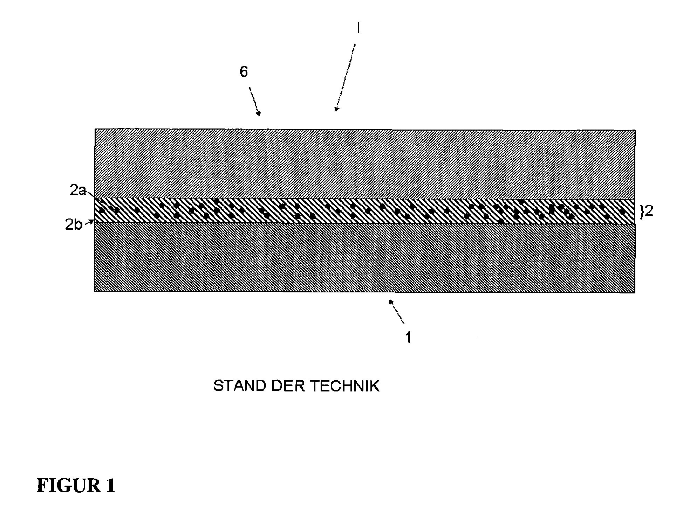

Figur 1 zeigt einen Querschnitt einer Glasscheibe (I) mit lumineszierenden Partikeln (2a) gemäß dem Stand der Technik. Die Glasscheibe (I) umfasst mindestens eine Scheibe (1), eine weitere Scheibe (6) und mindestens eine polymere Klebeschicht (2). Die Klebeschicht (2) umfasst eine Thermoplast-Folie (2b) aus PVB und lumineszierende Pigmente oder Farbstoffe (2a), welche nach der Laminierung der Glasscheibe (I) statistisch in der Thermoplast-Folie (2b) verteilt sind. Die breite Verteilung der Pigmente (2a) in der Thermoplast-Folie (2b) macht eine hohe Pigmentkonzentration erforderlich, da nur bei einer hohen Pigmentdichte (2a) die Leuchtkraft ausreichend hoch ist.

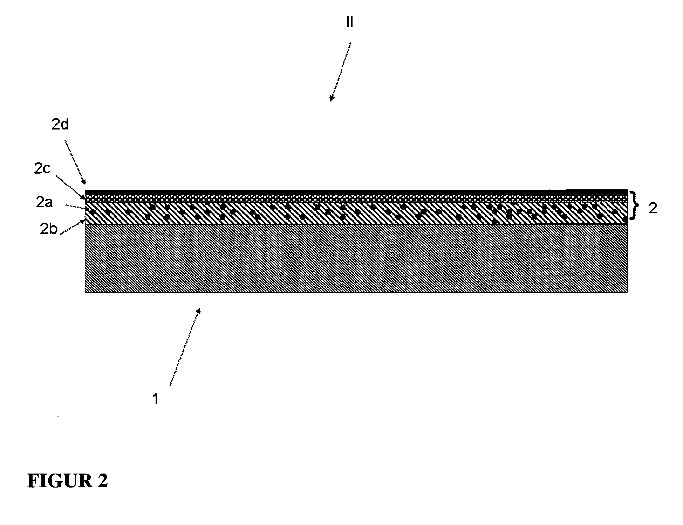

Figur 2 zeigt einen Querschnitt einer erfindungsgemäßen Glasscheibe (II). Die Glasscheibe (II) umfasst mindestens eine Scheibe (1) und mindestens eine polymere Klebeschicht (2). Die Klebeschicht (2) umfasst eine erste Thermoplast-Folie (2b) aus PVB und in der Thermoplast-Folie (2b) verteilte lumineszierende Pigmente (2a). An die erste Thermoplast-Folie (2b) schließt sich eine Sperr-Folie (2c) aus PET an, welche praktisch frei von lumineszierenden Pigmenten oder Farbstoffen (2a) ist. Der Ausdruck "praktisch frei" bezieht sich im Sinne der Erfindung auf keine mit dem Auge erkennbare Emission von elektromagnetischer Strahlung in der Sperr-Folie (3c) bei Anregung mit einer geeigneten Strahlungsquelle. Die Sperr-Folie (2c) enthält eine Antikratzbeschichtung (2d) aus Polysiloxan.

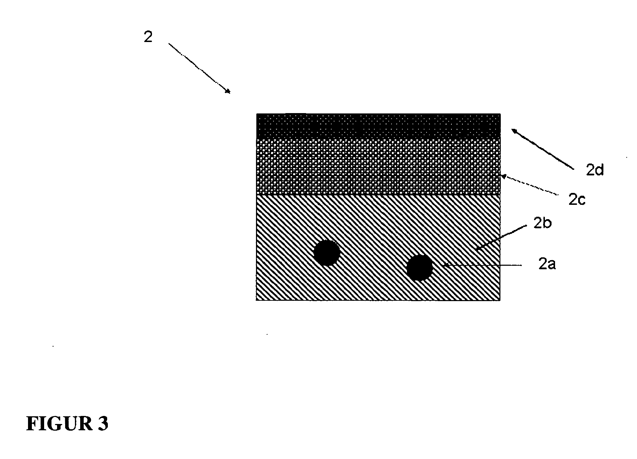

Figur 3 zeigt einen vergrößerten Querschnitt der erfindungsgemäßen Klebeschicht (2) aus der Thermoplast-Folie (2b) mit lumineszierenden Partikeln (2a) sowie der sich an die Thermoplast-Folie (2b) anschließenden Sperr-Folie (2c) und Antikratzbeschichtung (2d) aus Polysiloxan.

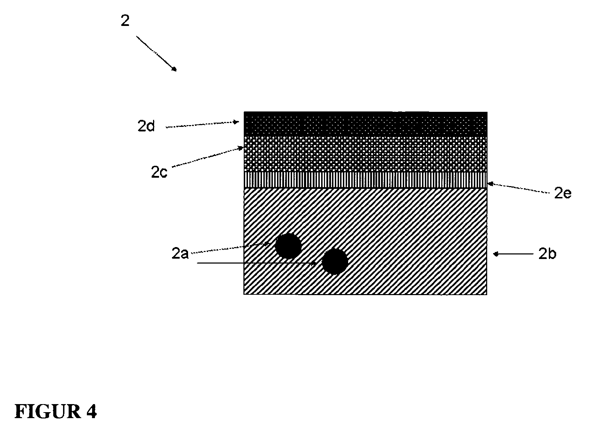

Figur 4 zeigt einen vergrößerten Querschnitt einer bevorzugten Ausführungsform der erfindungsgemäßen Klebeschicht (2) aus Thermoplast-Folie (2b) mit lumineszierenden Partikeln (2a) und der sich an die erste Thermoplast-Folie (2b) anschließenden Sperr-Folie (2c) und Antikratzbeschichtung (2d). Die Sperr-Folie (2c) weist benachbart zur Thermoplast-Folie (2b) eine metallische Beschichtung (2e) auf. Diese metallische Beschichtung kann beispielweise IR-reflektierend oder elektrisch beheizbar ausgebildet sein.

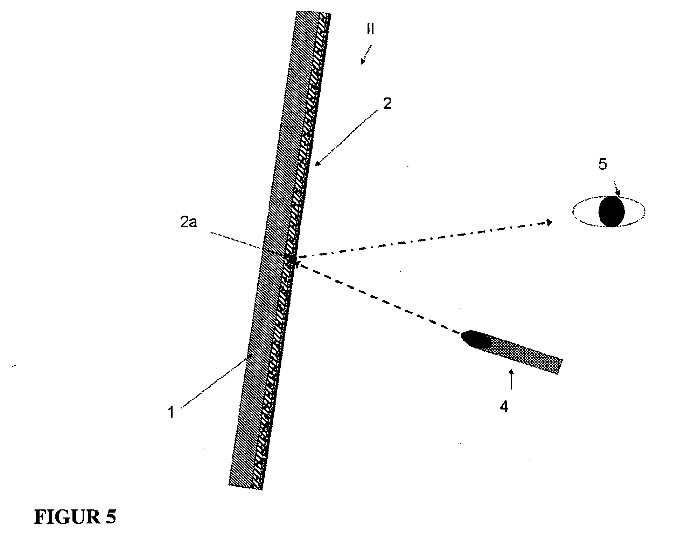

Figur 5 zeigt einen Querschnitt der erfindungsgemäßen Vorrichtung. Die Glasscheibe (II) umfasst eine Scheibe (1) und Klebeschicht (2). Die Klebeschicht (2) wird von einer Leuchtquelle (4), bevorzugt einem Laserscanner, angestrahlt. Die in der Klebeschicht (2) befindlichen lumineszierenden Pigmente (2a) emittieren Licht, welches vom Betrachter wahrgenommen wird.

### Bezugszeichenliste

- (1): Scheibe,
- (2): Klebeschicht,
- (2a): lumineszierendes Pigment oder Farbstoff,
- (2b): Thermoplast-Folie,
- (2c): Sperr-Folie,
- (2d): Antikratzbeschichtung,
- (2e): Beschichtung zwischen Sperr-Folie und Thermoplast-Folie,
- (3): Laminierscheibe,
- (4): Leuchtquelle,
- (5): Betrachter und
- (6): zweite Scheibe.

## Patentansprüche

1. Glasscheibe mindestens umfassend
a. eine Scheibe (1),
b. eine Klebeschicht (2) auf der Scheibe (1),
wobei die Klebeschicht (2) mindestens eine Thermoplast-Folie (2b) mit einem lumineszierenden Pigment (2a) und eine Sperr-Folie (2c) mit einer Antikratzbeschichtung (2d) umfasst, wobei das lumineszierende Pigment (2a) ein Hydroxyalkylterephthalat mit der Formel: R₁-COO-P(OH)x(0-4)-COO-R₂ enthält, wobei R₁, R₂ ein Alkyl- oder Allylrest mit 1 bis 10 C Atomen ist, P ein Phenylring, OH am Phenylring gebundene Hydroxylgruppen und x die Anzahl der am Phenylring gebundenen Hydroxylgruppen, bevorzugt Diethyl-2,5-dihydroxyterephtalat enthält.

2. Glasscheibe nach Anspruch 1, wobei die Sperr-Folie (2c) ein zweites lumineszierendes Pigment enthält.

3. Glasscheibe nach Anspruch 1 oder 2, wobei die Scheibe (1) vorgespanntes oder teilvorgespanntes Sicherheitsglas umfasst.

4. Glasscheibe nach einem der Ansprüche 1 bis 3, wobei die Sperr-Folie (2c) Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB) ohne Weichmacher und/oder Gemische und Copolymere davon, bevorzugt Polyethylenterephthalat (PET) enthält.

5. Glasscheibe nach einem der Ansprüche 1 bis 4, wobei das erste oder zweite lumineszierende Pigment (2a) ein Anregungsmaximum im Bereich von 350 nm bis 450 nm, bevorzugt 390 nm bis 420 nm und/oder ein Emissionsmaximum im Bereich von 400 nm bis 800 nm, bevorzugt 430 nm bis 500 nm aufweist.

6. Glasscheibe nach einem der Ansprüche 1 bis 5, wobei die Antikratzbeschichtung (2d) organisch oder anorganisch gebundenes SiO₂, TiO₂, Al₂O₃, Si₃N₄, bevorzugt Polysiloxane enthält.

7. Glasscheibe nach einem der Ansprüche 1 bis 6, wobei die Klebeschicht (2) eine Dicke von 0,30 mm bis 0,9 mm, bevorzugt 0,50 mm bis 0,80 mm aufweist.

8. Glasscheibe nach einem der Ansprüche 1 bis 7, wobei das lumineszierende Pigment (2a), Benzopyrane, Naphthopyrane, 2H-Naphthopyrane, 3H-Naphthopyrane, 2H-Phenanthropyrane, 3H-Phenanthropyrane, Photochrome Harze, Cumarine, Xanthine, Naphathalsäurederivate, Oxazole, Stilbene, Styryle, Perylene, Lanthanoide, bevorzugt Y₂O₃:Eu, YVO₄:Tm, Y₂O₂S:Pr, Gd₂O₂S:Tb und/oder Gemische davon enthält.

9. Glasscheibe nach einem der Ansprüche 1 bis 8, wobei die Scheibe (1) eine Dicke von 1 mm bis 8 mm, bevorzugt 1,4 mm bis 2,5 mm aufweist.

10. Glasscheibe nach einem der Ansprüche 1 bis 9, wobei die Sperr-Folie (2c) eine Beschichtung (2e), bevorzugt eine metallische Beschichtung , besonders bevorzugt ZnO, Ag, In₂O₃, Ti, TiO₂ und/oder AlN aufweist.

11. Vorrichtung zum Anzeigen eines Piktogramms, Schriftzeichen und/oder Zahlen, umfassend eine Glasscheibe nach den Ansprüchen 1 bis 10 und eine auf die Glasscheibe gerichtete Leuchtquelle (4), wobei die Leuchtquelle (4) elektromagnetische Strahlung auf die Glasscheibe emittiert.

12. Vorrichtung nach Anspruch 11, wobei die Leuchtquelle (4) einen Laser, bevorzugt einen Diodenlaser umfasst.

13. Verfahren zur Herstellung einer Glasscheibe, wobei
a. eine Thermoplast-Folie (2b) und eine Sperr-Folie (2c) mit Antikratzbeschichtung (2d) zu einer Klebeschicht (2) verbunden werden,
b. ein lumineszierendes Pigment (2a) auf der Thermoplast-Folie (2b) der Klebeschicht (2) aufgetragen wird und
c. die Klebeschicht (2) zwischen der Scheibe (1) und einer Laminierscheibe (3) laminiert wird und
d. die Laminierscheibe (3) entfernt wird.

14. Verwendung der Glasscheibe nach einem der Ansprüche 1 bis 10 als Head-Up-Display in Gebäuden, Fahrzeugen, Flugzeugen und/oder Hubschraubern, bevorzugt als Windschutzscheiben in Fahrzeugen oder Werbetafel.

## Claims

1. Glass pane comprising at least
a. a pane (1),
b. an adhesive layer (2) on the pane (1),
wherein the adhesive layer (2) comprises at least one thermoplastic film (2b) with a luminescent pigment (2a) and a barrier film (2c) with a non-scratch coating (2d), wherein the luminescent pigment (2a) contains a hydroxyalkyle terephthalate with the formula: R₁-COO-P(OH)ₓ(0-4)-COO-R₂, where R₁, R₂ is an alkyl or allyl residue with 1 to 10 C atoms, P a phenyl ring, OH hydroxyl groups bonded to the phenyl ring and x contains the number of hydroxyl groups bound to the phenyl ring, preferably diethyl-2,5-dihydroxyterephtalate.

2. Glass pane according to claim 1, wherein the barrier film (2c) contains a second luminescent pigment.

3. Glass pane according to claim 1 or 2, wherein the disc (1) includes tempered or heat-strengthened glass.

4. Glass pane according to one of the claims 1 to 3, where the barrier film (2c) contains polybutylene terephthalate (PBT), polycarbonate (PC), polyethylene terephthalate (PET) and polyethylene naphthalate (PEN), polyvinyl chloride (PVC), polyvinyl fluoride (PVF), polyvinyl butyral (PVB) without plasticizers and/or mixtures and copolymers thereof, preferably polyethylene terephthalate (PET).

5. Glass pane according to one of the claims 1 to 4, wherein the first or second luminescent pigment (2a) has an excitation maximum in the range of 350 nm to 450 nm, preferably 390 nm to 420 nm and/or an emission maximum in the range of 400 nm to 800 nm, preferably 430 nm to 500 nm.

6. Glass pane according to one of the claims 1 to 5, wherein the anti-scratch coating (2d) contains organically or inorganically bound SiO₂, TiO₂, Al₂O₃, Si3N₄, preferably polysiloxanes.

7. Glass pane according to one of the claims 1 to 6, where the adhesive layer (2) has a thickness of 0.30 mm to 0.9 mm, preferably 0.50 mm to 0.80 mm.

8. Glass pane according to one of the claims 1 to 7, wherein the luminescent pigment (2a) contains benzopyranes, naphthopyranes, 2H-naphthopyranes, 3H-naphthopyranes, 2H-phenanthropyranes, 3H-phenanthropyranes, photochromic resins, coumarins, xanthines, naphthalic acid derivatives, oxazoles, stilbenes, styryls, perylenes, lanthanides, preferably Y₂O₃:Eu, YVO₄:Tm, Y₂O₂S:Pr, Gd₂O₂S:Tb and/or mixtures thereof.

9. Glass pane according to one of the claims 1 to 8, wherein the pane (1) has a thickness of 1 mm to 8 mm, preferably 1.4 mm to 2.5 mm.

10. Glass pane according to one of the claims 1 to 9, wherein the barrier film (2c) has a coating (2e), preferably a metallic coating, in particular preferably ZnO, AG, In₂O₃, Ti, TiO₂ and/or AIN.

11. Device for displaying a pictogram, characters and/or numbers, including a glass pane according to the claims 1 to 10 and a light source (4) directed on the glass pane, wherein the light source (4) emits electromagnetic radiation onto the glass pane.

12. Device according to claim 11, wherein the light source (4) comprises a laser, preferably a diode laser.

13. Method for producing a glass pane wherein
a. a thermoplastic foil (2b) and a barrier film (2c) with anti-scratch coating (2d) are bonded to form an adhesive layer (2),
b. a luminescent pigment (2a) is applied on the thermoplastic foil (2b) of the adhesive layer (2) and
c. the adhesive layer (2) is laminated between the pane (1) and a lamination pane (3) and
d. the lamination pane (3) is removed.

14. Using the glass pane according to one of claims 1 to 10 as a head-up display in buildings, vehicles, aircraft or helicopters, preferably as windscreens in vehicles or billboards.

## Revendications

1. Vitre comprenant au moins
a. une plaque de verre (1),
b. une couche adhésive (2) sur la plaque de verre (1), où la couche adhésive (2) comprend au moins un film thermoplastique (2b) avec un pigment luminescent (2a) et un film barrière (2c) avec un revêtement anti-rayures (2d), où le pigment luminescent (2a) contient un téréphtalate hydroxyalkyle avec la formule : R₁-COO-P(OH)_{X}(0-4)-COO-R₂, où R₁, R₂ est un reste alkyl ou allyle avec entre 1 et 10 atomes C, P un anneau de phényle, OH des groupes d'hydroxyle liés aux anneaux de phényle et x est le nombre des groupes hydroxyles liés aux anneaux de phényle, de préférence le diéthyl-2,5-dihydroxytéréphtalate.

2. Vitre selon la revendication 1, où le film barrière (2c) contient un deuxième pigment luminescent.

3. Vitre selon la revendication 1 ou 2, où la plaque de verre (1) comprend du verre trempé ou du verre durci.

4. Vitre selon l'une des revendications 1 à 3, où le film barrière (2c) contient du téréphtalate de polybutylène (PBT), du polycarbonate (PC), du polyéthylène téréphtalate (PET) et du polynaphtalate d'éthylène (PEN), du polychlorure de vinyle (PVC), du polyfluorure de vinyle (PVF), du polyvinyle de butyral (PVB) sans plastifiants et/ou des mélanges et des copolymères de ceux-ci, de préférence du polyéthylène téréphtalate (PET).

5. Vitre selon l'une les revendications 1 à 4, où le premier ou le deuxième pigment luminescent (2a) présente une excitation maximale de l'ordre de 350 nm à 450 nm, de préférence 390 à 420 nm et/ou une émission maximale de l'ordre de 400 mn à 800 nm, de préférence 430 nm à 500 nm.

6. Vitre selon l'une des revendications 1 à 5, où le revêtement anti-rayures (2d) contient du SiO₂, TiO₂, Al₂O₃, Si₃N₄, liés organiquement ou inorganiquement, de préférence des polysiloxanes.

7. Vitre selon l'une des revendications 1 à 6, où la couche adhésive (2) présente une épaisseur de 0,30 mm à 0,9 mm, de préférence 0,50 mm a à 0,80 mm.

8. Vitre selon l'une des revendications 1 à 7, où le pigment luminescent (2a) contient des benzopyranes, des naphtopyranes, des 2H-naphtopyranes, des 3H-naphtopyranes, des 2H-phenanthropyranes, des 3H-phenanthropyranes, des résines photochromiques, des coumarines, des xanthines, des dérivés d'acide naphtalique, des oxazoles, des stilbènes, des styryles, des pérylènes, des lanthanides, de préférence Y₂O₃:Eu, YVO₄:Tm, Y₂O₂S:Pr, Gd₂O₂S:Tb et/ou des mélanges de ceux-ci.

9. Vitre selon l'une des revendications 1 à 8, où la plaque de verre (1) présente une épaisseur de 1 mm à 8 mm, de préférence de 1,4 mm à 2,5 mm.

10. Vitre selon l'une des revendications 1 à 9, où le film barrière (2c) présente un revêtement (2e), de préférence un revêtement métallique, et de préférence plus particulièrement le ZnO, l'Ag, l'In₂O₃, le Ti, le TiO₂ et/ou l'AIN.

11. Dispositif pour afficher un pictogramme, des caractères et/ou des chiffres, qui comprend une vitre selon les revendications 1 à 10 et une source lumineuse (4) dirigée sur la vitre, où la source lumineuse (4) émet des rayonnements électromagnétiques sur la vitre.

12. Dispositif selon la revendication 11, où la source lumineuse (4) comprend un laser, de préférence un laser à diode.

13. Méthode de fabrication d'une vitre où :
a. un film thermoplastique (2b) et un film barrière (2c) avec un revêtement anti-rayures (2d) sont reliés pour constituer une couche adhésive (2),
b. un pigment luminescent (2a) est appliqué sur le film thermoplastique (2b) de la couche adhésive (2) et
c. la couche adhésive (2) est laminée entre la vitre (1) et une plaque de stratification (3) et
d. la plaque de stratification (3) est enlevée.

14. Utilisation de la vitre selon l'une des revendications 1 à 10 comme affichage tête haute dans les bâtiments, les véhicules, les avions ou les hélicoptères, de préférence comme pare-brises dans des véhicules ou comme panneau publicitaire.
